# EUROPÄISCHE PATENTSCHRIFT

(11) **EP 2 506 611 B1**
(45) Veröffentlichungstag und Bekanntmachung des Hinweises auf die Patenterteilung: **12.07.2017**
(21) Anmeldenummer: 11002758.8
(22) Anmeldetag: 01.04.2011
(51) Int. Cl.: H04W 8/20

(54) **VERFAHREN ZUM BETRIEB EINES TELEKOMMUNIKATIONSNETZES**
METHOD FOR OPERATING A TELECOMMUNICATION NETWORK
PROCÉDÉ DESTINÉ AU FONCTIONNEMENT D'UN RÉSEAU DE TÉLÉCOMMUNICATION

(43) Veröffentlichungstag der Anmeldung: 03.10.2012
(73) Patentinhaber: Telefónica Germany GmbH & Co. OHG, 80992 München (DE)
(72) Erfinder: Drötboom, Michael, 80995 München (DE)
(74) Vertreter: Herrmann, Uwe

(56) Entgegenhaltungen:
- WO-A1-03/077585
- WO-A1-2005/071990
- US-A1- 2003 037 020
- US-A1- 2006 136 907
- KLAUS-JOSEF KUNTE THOMAS HANNA: "Ubiquitous Network Address Book Server for device independent phonebook and contact list data exchange with secured data access", IP.COM JOURNAL, IP.COM INC., WEST HENRIETTA, NY, US, 23. Juli 2003 (2003-07-23), XP013012165, ISSN: 1533-0001

## Beschreibung

Die Erfindung betrifft ein Verfahren zum Betrieb eines Mobilfunknetzes mit einem oder mehreren darin betreibbaren Endgeräten, wobei mindestens ein Endgerät wenigstens ein Kenndatenmodul mit lokalem Speicher aufweist.

Bekannte Kenndatenmodule sind nach dem Prinzip einer Chipkarte aufgebaut und werden zur Identifikation und Authentifikation des Mobilfunkteilnehmers in das erforderliche mobile Endgerät eingesteckt oder eingebaut. Alle Modelle weisen hierzu einen notwendigen Mikroprozessor mit zugehöriger Speicherstruktur auf.

Die im Mobilfunk verwendeten Kenndatenmodule in Form von Chipkarten unterscheiden sich hinsichtlich des verwendeten Mobilfunkstandards in ihrer technischen Ausführung, ihres Aussehens und ihres Speicherinhaltes. Die im GSM-Standard verwendeten Karten werden als SIM-Karten bezeichnet. Aktuell wird die darauf basierende und technisch weiterentwickelte UICC-Karte in modernen UMTS- und LTE-Netzen eingesetzt. Der Standard beschreibt unabhängig von der technischen Ausprägung der Karten auch die physische Formgebung, wobei derzeit zwischen der klassischen Form und der Mikroform unterschieden wird.

Auf der SIM-/UICC-Karte können neben den zur Authentifizierung des Teilnehmers erforderlichen Daten Benutzer- oder auch Betreiberdaten, die einen Brand der Karte auf einen entsprechenden Netzanbieter bewirken, hinterlegt sein. Hierunter fallen beispielsweise Betreiberlogos, Telefonbucheinträge, etwaige Servicecodes sowie weitere Daten zur Bereitstellung netzabhängiger Dienstleistungen. Die Betreiberlogos, Telefonbucheinträge und Codes sind folglich nicht nur Netzbetreiber- und Serviceprovider abhängig, sondern unterscheiden sich häufig sogar pro Mobilfunkmarke (Brand), da hier beispielsweise unterschiedliche Hotline-Nummern hinterlegt sind. Die Verwaltung der ungleichen SIM-/UICC-Karten bezüglich der erwünschten Brands bedeutet auf Seiten des Netzanbieters einen hohen Entwicklungs-, Lagerungs- und Kapazitätsplanungsaufwand für die einzelnen Karten. Eine Änderung einzelner spezifischer Datenparameter ist zwar per "Over The Air" (OTA)-Verfahren möglich, allerdings gewähren die aktuell eingesetzter Methoden nur beschränkten Zugriff auf die gespeicherten Daten der SIM-/UICC-Karten, da lediglich eine unidirektional Kommunikation bereitgestellt wird. Eine weitere Einschränkung ist, dass OTA nur im Rahmen von Kampanien einsetzbar ist.

Darüber hinaus ist es auf Kunden- sowie Netzanbieterseite wünschenswert, dass bei einem Kartenaustausch, sei es aufgrund eines Kartenverlusts oder auch eines Kartendefektes, die bis dahin auf der ursprünglichen Karte gespeicherten Daten auch zukünftig auf der Austauschkarte zur Verfügung stehen. Ein Datenverlust wäre gerade bei zukünftigen Bezahldiensten unakzeptabel.

Aus der WO03/077585 A1 ist es bekannt, die auf einer SIM-Karte gespeicherte IMSI durch eine im Netzwerk bereitgestellte IMSI zu aktualisieren. Die IMSI wird dazu per SMS an das mobile Endgerät übertragen.

US2006/0136907 A1 beschreibt ein Verfahren in dem Endgeräte sicherheitspezifische Daten für ein Bezahlsystem im Anschluss an eine ausgeführte Transaktion, die eine Änderung der zugeordneten sicherheitsspezifischen Daten im lokalen Speicher des Kenndatenmoduls bewirkt, abgleichen, wobei ein Replizieren der im lokalen Speicher des Kenndatenmoduls gespeicherten sicherheitsspezifischen Daten in den Speicher einer zentralen Einheit erfolgt. Die vorliegende Erfindung zeigt Lösungen auf, die die vorgenannte Problematik bei der Verwendung von Kenndatenmodulen mit gespeicherten nutzungsrelevanten Daten überwindet.

Diese Aufgabe wird durch ein Verfahren zum Betrieb eines Mobilfunknetzes, mit den Merkmalen des Anspruchs 1 gelöst.
Das erfindungsgemäße Verfahren läßt sich bei Mobilfunknetzen mit einem oder mehreren darin betreibbaren Endgeräten anwenden, wobei mindestens ein Endgerät wenigstens ein Kenndatenmodul mit lokalem Speicher aufweist.

Erfindungsgemäß erfolgt ein bidirektionaler Datenabgleich zwischen dem im lokalen Speicher wenigstens eines Kenndatenmoduls gespeicherten Daten und den im wenigstens einer zentralen Einheit gespeicherten Daten. Die Daten können folglich nicht nur von der zentralen Einheit an das Kenndatenmodul übermittelt werden sondern ebenso in umgekehrter Richtung vom Kenndatenmodul zur zentralen Einheit. Folglich lässt sich ein vollständiges Abbild des lokalen Speichers wenigstens eines Kenndatenmoduls zu Backupzwecken im Speicher wenigstens einer zentralen Einheit erzeugen.

Das Speicherabbild kann beispielsweise zur Wiederherstellung des Speicherinhalts eines Kenndatenmoduls herangezogen werden. Dies ist insbesondere dann von Vorteil, wenn im Kenndatenmodul ein Speicherverlust aufgetreten ist. Darüber hinaus lässt sich der Speicherinhalt des ursprünglichen Kenndatenmoduls einfach auf ein Austauschkenndatenmodul reproduzieren.

Ein weiterer Vorteil besteht darin, dass die Ausgabe von netzbetreiber- bzw. serviceproviderspezifischen Kenndatenmodulen mit entsprechenden spezifischen Speicherinhalten überflüssig ist. Anders als im Stand der Technik muß der Speicher der Kenndatenmodule nicht mit individuell vordefinierten Daten belegt werden, sondern der Netzbetreiber kann ein einheitliches Kenndatenmodul anbieten bzw. ausliefern. Die notwendigen Daten werden vom Netzanbieter über die zentrale Einheit zur Verfügung gestellt, die Speicherbelegung des Kenndatenmoduls mit netzbetreiberspezifischen Daten erfolgt demnach erst nach der Erstinbetriebnahme des Moduls auf Grundlage des erfindungsgemäßen Verfahrens.

Dabei können die Daten auf einer einzelnen zentralen Einheit oder verteilt auf einer Vielzahl an Einheiten vorliegen.

Die Ausführung der zentralen Einheit ist für die grundlegende Idee der vorliegenden Erfindung unerheblich. Beispielsweise kann die zentrale Einheit Bestandteil des Mobilfunknetzes sein. Eine Integration der zentralen Einheit in eine bestehende Netzkomponente, wie zum Beispiel Netzknoten, Register, etc., bzw. die Neuintegration in das Netz als selbständige Komponente ist denkbar.

Alternativ oder zusätzlich kann die zentrale Einheit in einem Fremdnetz untergebracht sein, dass über das Mobilfunknetz zugänglich ist. In diesem Zusammenhang ist es vorstellbar, dass die zentrale Einheit in Form eines Internetservers über das Internet an das Mobilfunknetz angebunden wird. Grundsätzlich kann die zentrale Einheit als Cloud zur Verfügung gestellt werden, um die Funktionalität der zentralen Einheit dynamisch an den Speicherbedarf angepaßt über ein beliebiges IT-Netzwerk bereitzustellen.

Die im lokalen Speicher des Kenndatenmoduls hinterlegten Daten sind beispielsweise Applikationsdaten, auf die von einem auf dem Kenndatenmodul und/oder dem Endgerät ausführbaren Programm zur Datenverarbeitung zugegriffen wird. Die Daten umfassen weiterhin vorzugsweise betreiberspezifische Daten, wie Betreiberlogos oder USSD-Codes (Unstructured Supplementary Service Data), die zur Bereitstellung spezifischer Servicedienstleistungen des Netzanbieters notwendig sind.

Möglich ist auch die Speicherung privater Nutzerdaten im lokalen Speicher des Kenndatenmoduls. Zu den privaten Nutzerdaten zählen beispielsweise Kontakt- bzw. Telefonbucheinträge, SMS oder E-Mails

Erfindungsgemäß ist vorgesehen, dass sicherheitsspezifische Daten für ein Bezahlsystem durch den Datenabgleich des erfindungsgemäßen Verfahrens berücksichtigt werden. Möglich ist es, dass Daten im lokalen Speicher hinterlegt sind, um sogenannte "Secure Domains" für derzeitige oder zukünftige Bezahldienste zu realisieren. Die "Secure Domains" enthalten Daten für bestimmte Bezahldienste, die Kontostände, Transaktionen oder ähnliche Finanzvorgänge charakterisieren.

Erfindungsgemäß wird der Datenabgleich durch das Kenndatenmodul initiiert und/oder ausgeführt. Eine auf dem Kenndatenmodul ausgeführte Applikation steuert die notwendigen Prozesse, um einen Datenabgleich zwischen den im lokalen Speicher hinterlegten Daten mit einer zentralen Einheit auszuführen. Für die Übermittlung der zu synchronisierenden Daten bedient sich das Kenndatenmodul der Sende- und Empfangseinheit des entsprechenden Endgerätes.

Das Initiieren und Ausführen des Datenabgleichs betrifft im Übrigen nicht nur das Übermitteln der zu berücksichtigenden Daten an die zentrale Einheit, sondern umfaßt gleichfalls die notwendigen Schritte, um einen von der zentralen Einheit ausgelösten Datenabgleich zu ermöglichen, indem die durch das Endgerät empfangenen Daten mit den im lokalen Speicher hinterlegten Daten abgeglichen werden.

Besonders vorteilhaft ist die Ausführung des Kenndatenmoduls als SIM- oder UICC-Karte. Die grundlegende erfindungsgemäße Idee des vorgestellten Verfahrens ist jedoch ohne Weiteres auf zukünftigen Kenndatenmodulen technologisch fortentwickelter Mobilfunknetzes anwendbar.

Die Implementierung und Ausführung der vorstehend erläuterten Applikation basiert bevorzugt auf Grundlage des SIM Applikation Toolkits für SIM-Karten (SAT) bzw. auf Grundlage des Card Application Toolkits (CAT) für moderne UICC-Karten, die beide die erforderlichen Voraussetzungen für die Ausführung der Applikationen auf einer SIM-/UICC-Karte bieten.

Zusätzlich ist es denkbar, dass die Initiierung und Ausführung eines Datenabgleichs von dem betroffenen Endgerät angeregt bzw. umgesetzt wird. Beispielsweise dient hierzu eine auf dem Endgerät ausgeführte Applikation, die gleichfalls für den Datenabgleich zu einer zentralen Einheit, als auch für die Verarbeitung eines von der zentralen Einheit ausgelösten Datenabgleichs ausgelegt ist.

In diesem Zusammenhang ist es denkbar, dass eine auf einem Endgerät lauffähige Applikation bereits vor der Auslieferung des Endgerätes implementiert ist, oder alternativ nachträglich vom Benutzer auf das Endgerät geladen werden kann. Derartige Applikationen werden umgangssprachlich auch einfach als "App" bezeichnet.

Erfindungsgemäß sind ein oder mehrere Trigger vorgesehen, die den erfindungsgemäßen Datenabgleich zwischen zentraler Einheit und Kenndatenmodul auslösen. Als Trigger können beispielsweise beliebige Zeitpunkte oder Zeitintervalle gewählt werden. Möglich ist es auch, einen Datenabgleich durch ein definierbares Ereignis auszulösen.

Erfindungsgemäß ist vorgesehen, dass ein Datenabgleich nach der Erstinbetriebnahme des Endgerätes bzw. des Kenndatenmoduls ausgelöst wird. Weiter erfindungsgemäßwird ein Datenabgleich im Anschluß an eine ausgeführte Transaktion des verwendeten Bezahldienstes, die eine Änderung der zugeordneten Daten im lokalen Speicher des Kenndatenmoduls bewirkt, ausgelöst.

Die notwendige Datenverbindung zum Datenabgleich zwischen der zentralen Einheit und dem Kenndatenmodul bzw. dem Endgerät verwendet bevorzugt ein Transportprotokoll zur Übertragung der Daten. Als vorteilhaft erweist sich die Verwendung des bekannten CAT_TP-Protokolls. Die zu übertragenden Daten werden mit Hilfe des bekannten User Datagram Prokolls (UDP) unter Verwendung des CAT_TP-Protokolls übertragen.

Insbesondere lässt sich das erfindungsgemäße Verfahren in einem Telekommunikationsnetz ausführen, das auf einem der Mobilfunkstandards GSM, GPRS, EDGE, UMTS, HSPA, LTE oder LTE Advanced basiert.

Die vorliegende Erfindung betrifft weiterhin ein Mobilfunknetz mit einem oder mehreren Endgeräten und wenigstens einer zentralen Einheit, wobei die Endgeräte bzw. die integrierten Kenndatenmodule sowie die zentrale Einheit derart ausgeführt sind, um das erfindungsgemäße Verfahren nach einem der vorgenannten vorteilhaften Ausführungen auszuführen. Das erfindungsgemäße Mobilfunknetz weist offensichtlich dieselben Vorteile und Eigenschaften wie das erfindungsgemäße Verfahren auf, weshalb an dieser Stelle auf eine erneute Erläuterung verzichtet wird.

Darüber hinaus sei darauf hingewiesen, dass die zentrale Einheit entweder fester Bestandteil des Mobilfunknetzes oder Bestandteil eines über das Mobilfunknetz zugänglichen Fremdnetzes ist.

Ferner ist die Erfindung auf ein Kenndatenmodul, insbesondere SIM- oder UICC-Karte, für ein mobiles Endgerät zum Betrieb in einem Mobilfunknetz gerichtet, wobei das Kenndatenmodul Mittel zum bidirektionalen Datenabgleich mit einer über ein Mobilfunknetz zugänglichen zentralen Einheit aufweist. Insbesondere sind das Kenndatenmodul bzw. die integrierten Mittel des Kenndatenmoduls geeignet, um das erfindungsgemäße Verfahren auszuführen.

Entsprechende Mittel sind ein oder mehrere Applikationen, die auf einem Kenndatenmodul, insbesondere einer SIM-/UICC-Karte ausführbar sind. Die notwendige Laufzeitumgebung bietet beispielsweise das SIM Application Toolkit (SAT) oder das Card Application Toolkit (CAT).

Das erfindungsgemäße Kenndatenmodulweist offensichtlich dieselben Vorteile und Einzelheiten wie das erfindungsgemäße Verfahren gemäß einer der vorangehend erläuterten Ausführungen auf, weshalb an dieser Stelle auch auf eine wiederholende Beschreibung verzichtet wird.

Die Erfindung betrifft ferner eine auf einem Datenträger gespeicherte Applikation zur Durchführung des Verfahrens gemäß einem der Ansprüche 1 bis 8, wobei die Applikation mittelbar oder unmittelbar auf dem erfindungsgemäßen Kenndatenmodul ausführbar ist.

Weitere Einzelheiten und Vorteile der Erfindung werden im folgenden anhand einer Zeichnung näher erläutert.

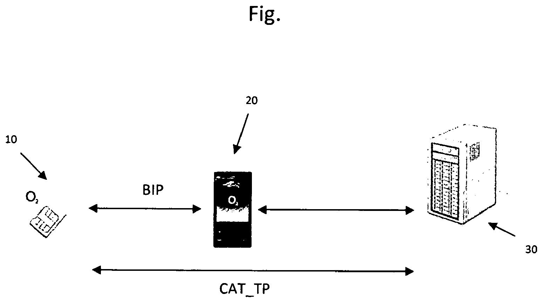

Die einzige Figur zeigt eine schematische Darstellung der möglichen Kommunikation zwischen dem erfindungsgemäßen Kenndatenmodul 10 und einer zentralen Einheit 30. Die Ausbildung des dargestellten Kenndatenmoduls 10 entspricht einer bekannten UICC-Karte, die für den Einsatz in einem modernen UMTS-Mobilfunknetz ausgelegt ist. Die physikalische Form der SIM Karte 10 kann entweder klassisch oder auch als Mikro SIM Karte ausgeführt sein.

Die UICC-Karte 10 beinhaltet zum einen die notwendigen Daten, die für eine Authentifizierung des Benutzers des mobilen Endgerätes 20 im Mobilfunknetz des Netzanbieters erforderlich sind sowie zum anderen ein oder mehrere Betreiberlogos, Telefonbucheinträge, USSD-Codes und zukünftig auch sogenannte "Secured Domains", die für den Einsatz zukünftiger Bezahldienste geeignet sind, die beispielsweise auf Grundlage von "Near Field Communication" (NFC) arbeiten.

Die Betreiberlogos, Telefonbucheinträge und USSD-Codes sind dabei nicht nur Netzbetreiber und Serviceprovider abhängig, sondern unterscheiden sich pro Marke/Brand, da beispielsweise unterschiedliche Hotline-Nummern hinterlegt sind.

Anstatt die UICC-Karte 10 noch vor der Auslieferung an den Kunden mit den angesprochenen Daten zu beschreiben, wird diese mit nahezu leerem Speicherinhalt an den Endkunden ausgegeben. Die markenspezifischen Daten liegen stattdessen zentral im Datenspeicher der zentralen Einheit 30.

Das Bezugszeichen 30 bezeichnet beispielsweise eine konkrete Netzwerkkomponente des Mobilfunknetzes. Alternativ kann das Bezugszeichen 30 auch für einen konkreten netzfremden Server, beispielsweise Internetserver, stehen, der über das Mobilfunknetz mittelbar erreichbar ist. Ferner können auch sogenannte Clouds verwendet werden, die für eine dynamisch zugewiesene IT-Infrastruktur in einem beliebigen Netzwerk stehen und bedarfsabhängig die gestellten Anforderungen, insbesondere an die Datenspeicherung, angepaßt und zur Verfügung gestellt werden. Maßgeblich ist also, dass über das Mobilfunknetz unmittelbar/mittelbar eine Datenkommunikation zwischen UICC-Karte 10 und zentraler Einheit 30, unabhängig von der Ausführung als Mobilfunknetzkomponente, Internet-Server oder Cloud, aufbaubar ist.

Das erfindungsgemäße Verfahren ermöglicht eine bidirektionale Kommunikation zwischen der zentralen Einheit 30 und der UICC-Karte 10 des Endgerätes 20. Die allgemein gültige UICC-Karte 10 wird vor der Inbetriebnahme des Endgerätes 20 in dieses eingesetzt und erlaubt die Einwahl in das Mobilfunknetz des zuständigen Netzanbieters. Erst nach erfolgreicher Einwahl des Endgerätes 20 mit der UICC-Karte 10 in das Mobilfunknetz werden die brandspezifischen Daten, die in der zentraler Einheit 30 vom Netzanbieter hinterlegt werden, mit dem Speicher der UICC-Karte 10 synchronisiert bzw. aktualisiert. Damit entfallen die Kosten für die Entwicklung, Lagerung und Kapazitätsplanung markenspezifischer UICC-Karten.

Weitere Vorteile kommen dadurch zum Tragen, dass ein Marken- und Produktwechsel ohne UICC-Kartenaustausch durchgeführt werden kann. Darüber hinaus lassen sich "Secure Domains" für derzeitige und zukünftige Bezahldienste, die Kontostände, Transaktionen etc. symbolisieren, auch bei einem notwendigen Kartentausch beibehalten, da die diesbezüglich relevanten Informationen parallel zur UICC-Karte 10 in der zentralen Einheit 30 als Backup zur Verfügung stehen.

Selbiges gilt für benutzerspezifische Daten, wie beispielsweise etwaige Telefonbucheinträge, die dem Endbenutzer auch nach einem Kartenaustausch weiterhin zur Verfügung stehen.

Zur technischen Realisierung des erfindungsgemäßen Verfahrens ist eine Applikation notwendig, die auf dem bekannten Card Application Toolkit (CAT) für UICC-Karten 10 basiert. Die auf der Karte 10 lauffähige Applikation verfolgt die Aufgabe, den Speicherinhalt der Karte 10 gezielt oder vollständig mit dem Datenbestand der zentralen Einheit 30 zu synchronisieren oder abzurufen. Die dazu notwendige Datenverbindung zwischen der Karte 10 bzw. dem Endgerät 20 und der zentralen Einheit 30 wird über das standardisierte CAT_TP-Protokoll realisiert, das ausführlich in den ETSI Normen TS 102 124 und TS 102 127 beschrieben ist.

Über das CAT_TP-Protokoll werden die Daten im User Datagram Protokoll (UDP) verpackt übertragen. Voraussetzung hierfür ist die Kompatibilität der UICC-Karte 10 bzw. des Endgerätes 20 als auch der zentralen Einheit 30 als Gegenstelle zum verwendeten CAT_TP Protokoll. Die Kommunikation zwischen UICC-Karte 10 und Endgerät 20 basiert auf Grundlage des bekannten "Bearer Independent Protocol" (BIP). Die Kommunikation zwischen Endgerät 20 und zentraler Einheit 30 ist dabei vom eingesetzten Mobilfunkstandard sowie der konkreten Lage der zentralen Einheit 30 abhängig. Erfindungswesentlich ist lediglich, dass in der Transportschicht die Datenkommunikation zwischen UICC-Karte10 bzw. Endgerät 20 und zentraler Einheit 30 über das CAT_TP Protokoll gewährleistet wird.

Die Datensynchronisierung kann unter Verwendung bestimmter Trigger sowohl in der UICC-Karte 10 als auch in der zentralen Einheit 30 ausgelöst werden. Beispielsweise wird ein Datenabgleich bei der Erstinbetriebnahme der UICC-Karte 10 ausgeführt. Weiterhin werden Synchronisierungsvorgänge zu beliebigen Zeitpunkten oder innerhalb bestimmter Zeitintervalle wiederholt. Zusätzlich ist eine ereignisgesteuerte Synchronisierung denkbar, die zum Beispiel nach erfolgter Datenänderung auf Karten- oder Einheitsseite gestartet wird. Darunter fallen beispielsweise Transaktionen, die notwendige Kontostandsänderung bewirken und folglich den Dateninhalt der UICC-Karte 10 verändern.

Prinzipiell kann eine Implementierung des erfindungsgemäßen Verfahrens auch mittels einer "App" erfolgen, die insbesondere nachträglich auf einem Mobiltelefon 20 installiert werden kann, wobei einerseits auf die lokale UICC-Karte 10 lesend und schreibend zugegriffen und andererseits mit der zentralen Einheit 30 kommuniziert wird.

## Patentansprüche

1. Verfahren zum Betrieb eines Mobilfunknetzes, mit einem oder mehreren darin betreibbaren Endgeräten, (20), wobei mindestens ein Endgerät wenigstens ein Kenndatenmodul (10) mit lokalem Speicher aufweist, wobei ein bidirektionaler Datenabgleich zwischen im lokalen Speicher wenigstens eines Kenndatenmoduls gespeicherten Daten und in wenigstens einer zentralen Einheit (30) gespeicherten Daten über das Mobilfunknetz erfolgt, wobei es sich bei den abzugleichenden Daten um sicherheitspezifische Daten für ein Bezahlsystem handelt, die Kontostände, Transaktionen oder ähnliche Finanzvorgänge charakterisieren, wobei der Datenabgleich durch das Kenndatenmodul bei Erstinbetriebnahme des Kenndatenmoduls und im Anschluss an eine ausgeführte Transaktion des verwendeten Bezahldienstes, die eine Änderung der zugeordneten sicherheitsspezifischen Daten im lokalen Speicher des Kenndatenmoduls bewirkt, durch eine auf dem Kenndatenmodul ausgeführte Applikation initiiert wird, wobei der durch Erstinbetriebnahme ausgelöste Datenableich ein Replizieren der in der zentralen Einheit gespeicherten sicherheitsspezifischen Daten in den lokalen Speicher des Kenndatenmoduls vorsieht und der durch eine Transaktion ausgelöste Datenableich ein Replizieren der im lokalen Speicher des Kenndatenmoduls gespeicherten sicherheitsspezifischen Daten in den Speicher der zentralen Einheit umfasst.

2. Verfahren nach Anspruch 1, **dadurch gekennzeichnet, dass** der bidirektionale Datenabgleich mit einer zentralen Einheit erfolgt, die Bestandteil des Mobilfunknetzes ist, wobei die zentrale Einheit insbesondere in eine bestehende Telekommunikationsnetzkomponente integriert ist oder als separate eigenständige Einheit ausgebildet ist.

3. Verfahren nach einem der vorhergehenden Ansprüche, **dadurch gekennzeichnet, dass** der Datenabgleich mit einer zentralen Einheit erfolgt, die Bestandteil eines externen Kommunikationsnetzes ist, beispielsweise ein Internetserver oder Cloud.

4. Verfahren nach einem der vorhergehenden Ansprüche, **dadurch gekennzeichnet, dass** das Kenndatenmodul eine SIM-Karte oder eine UICC-Karte ist und die Applikation auf Grundlage des SIM Application Toolkits (SAT) oder Card Application Toolkits (CAT) implementiert ist und ausgeführt wird.

5. Verfahren nach einem der vorhergehenden Ansprüche, **dadurch gekennzeichnet, dass** der Datenabgleich durch das Endgerät initiiert und/oder ausgeführt wird, beispielsweise durch eine auf dem Endgerät ausgeführte Applikation mit entsprechenden Lese- und Schreibrechten für den lokalen Speicher des Kenndatenmoduls.

6. Verfahren nach einem der vorhergehenden Ansprüche, **dadurch gekennzeichnet, dass** der Datenabgleich in definierbaren Zeitintervallen und/oder zu definierten Zeitpunkten ausgelöst wird.

7. Verfahren nach einem der vorhergehenden Ansprüche, **dadurch gekennzeichnet, dass** die Datenkommunikation zum Datenabgleich auf Grundlage des CAT_TP Protokolls erfolgt.

8. Verfahren nach einem der vorhergehenden Ansprüche, **dadurch gekennzeichnet, dass** das Mobilfunknetz auf einem der Mobilfunkstandards GSM, GPRS, EDGE, UMTS, HSPA, LTE oder LTE Advanced basiert.

9. Mobilfunknetz mit einem oder mehreren Endgeräten und wenigstens einer über das Mobilfunknetz zugänglichen zentralen Einheit zur Ausführung des Verfahrens nach einem der Ansprüche 1 bis 8.

10. Kenndatenmodul, insbesondere SIM-Karte oder UICC-Karte, für ein Endgerät zum Betrieb in einem Mobilfunknetz, wobei das Kenndatenmodul Mittel zum bidirektionalen Datenabgleich mit einer über das Mobilfunknetz zugänglichen zentralen Einheit aufweist und zur Ausführung des Verfahrens nach einem der Ansprüche 1 bis 8 geeignet ist.

11. Applikation gespeichert auf einem Datenträger geeignet zur Durchführung des Verfahrens gemäß einem der Ansprüche 1 bis 8, wobei die Applikation mittelbar/unmittelbar auf einem Kenndatenmodul gemäß Anspruch 10 ausführbar ist.

## Claims

1. A method of operating a mobile network comprising one or more end devices (20) operable therein,
wherein at least one end device has at least one characteristics module (10) having a local memory, with a bidirectional data comparison taking place over the mobile network between data stored in the local memory of at least one characteristics module and data stored in at least one central unit (30);
wherein the data to be compared are safety-specific data for a payment system that characterize account balances, transactions or similar financial procedures; and wherein the data comparison by the characteristics module is initiated by an application executed on the characteristics module on a first putting into operation of the characteristics module and subsequent to an executed transaction of the used payment service that effects a change of the associated safety-specific data in the local memory of the characteristics module, with the data comparison triggered by the first putting into operation providing a replication of the safety-specific data stored in the central unit in the local memory of the characteristics module and with the data comparison triggered by a transaction comprising a replication of the safety-specific data stored in the local memory of the characteristics module into the memory of the central unit.

2. A method in accordance with claim 1, **characterized in that** the bidirectional data comparison takes place using a central unit that is a component of the mobile network, with the central unit in particular being integrated into an existing telecommunications network component or being configured as a separate independent unit.

3. A method in accordance with one of the preceding claims, **characterized in that** the data comparison takes place using a central unit that is a component of an external communications network, for example an internet server or a cloud.

4. A method in accordance with one of the preceding claims, **characterized in that** the characteristics module is a SIM car or a UICC card and the application is implemented and executed on the basis of the SIM application toolkit (SAT) or card application toolkit (CAT).

5. A method in accordance with one of the preceding claims, **characterized in that** the data comparison is initiated and/or executed by the end device, for example by an application executed on the end device and having corresponding reading and writing rights for the local memory of the characteristics module.

6. A method in accordance with one of the preceding claims, **characterized in that** the data comparison is triggered in definable time intervals and/or at defined points in time.

7. A method in accordance with one of the preceding claims, **characterized in that** the data communication for the data comparison takes place on the basis of the CAT_TP protocol.

8. A method in accordance with one of the preceding claims, **characterized in that** the mobile network is based on one of the mobile radio standards GSM, GPRS, EDGE, UMTS, HSPA, LTE or LTE Advanced.

9. A mobile network having one or more end devices and at least one central unit accessible over the mobile network for carrying out the method in accordance with one of the claims 1 to 8.

10. A characteristics module, in particular a SIM card or a UICC card, for an end device for operation in a mobile network, wherein the characteristics module has means for a bidirectional data comparison with a central unit accessible over the mobile network and is suitable for carrying out the method in accordance with one of the claims 1 to 8.

11. An application stored on a data carrier suitable for carrying out the method in accordance with one of the claims 1 to 8, wherein the application is executable indirectly/directly on a characteristics module in accordance with claim 10.

## Revendications

1. Procédé destiné au fonctionnement d'un réseau de téléphonie mobile, comprenant un ou plusieurs terminaux (20) pouvant être exploités dans celui-ci, dans lequel
au moins un terminal comporte au moins un module de données caractéristiques (10) doté d'une mémoire locale, dans lequel une synchronisation de données bidirectionnelle entre des données enregistrées dans la mémoire locale d'au moins un module de données caractéristiques et des données enregistrées dans au moins une unité centrale (30) est effectuée par le biais du réseau de téléphonie mobile, dans lequel
les données à comparer sont des données spécifiques à la sécurité pour un système de paiement, qui caractérisent des relevés de compte, des transactions ou des opérations financières similaires, dans lequel
la synchronisation de données est lancée par le module de données caractéristiques par une application exécutée sur le module de données caractéristiques lors de la première mise en service du module de données caractéristiques et après une transaction effectuée du service de paiement utilisé, qui entraine une modification des données spécifiques à la sécurité associées dans la mémoire locale du module de données caractéristiques, dans lequel la synchronisation de données déclenchée par la première mise en service prévoit une duplication dans la mémoire locale du module de données caractéristiques des données spécifiques à la sécurité enregistrées dans l'unité centrale et la synchronisation de données déclenchée par une transaction comprend une duplication dans la mémoire de l'unité centrale des données spécifiques à la sécurité enregistrées dans la mémoire locale du module de données caractéristiques.

2. Procédé selon la revendication 1, **caractérisé en ce que** la synchronisation de données bidirectionnelle est effectuée avec une unité centrale, qui fait partie du réseau de téléphonie mobile, l'unité centrale étant en particulier intégrée dans un composant de réseau de télécommunication existant ou réalisée sous la forme d'une unité autonome séparée.

3. Procédé selon l'une des revendications précédentes, **caractérisé en ce que** la synchronisation de données est effectuée avec une unité centrale, qui fait partie d'un réseau de communication externe, par exemple un serveur internet ou un nuage.

4. Procédé selon l'une des revendications précédentes, **caractérisé en ce que** le module de données caractéristiques est une carte SIM ou une carte UICC et l'application est implémentée et exécutée sur la base du SIM Application Toolkit (SAT) ou du Card Application Toolkit (CAT).

5. Procédé selon l'une des revendications précédentes, **caractérisé en ce que** la synchronisation de données est lancée et/ou exécutée par le terminal, par exemple par une application exécutée sur le terminal disposant de droits de lecture et d'écriture correspondants pour la mémoire locale du module de données caractéristiques.

6. Procédé selon l'une des revendications précédentes, **caractérisé en ce que** la synchronisation de données est déclenchée dans des intervalles de temps pouvant être définis et/ou à des moments définis.

7. Procédé selon l'une des revendications précédentes, **caractérisé en ce que** la communication de données pour la synchronisation de données est effectuée sur la base du protocole CAT_TP.

8. Procédé selon l'une des revendications précédentes, **caractérisé en ce que** le réseau de téléphonie mobile est basé sur un des standards de téléphonie mobile GSM, GPRS, EDGE, UMTS, HSPA, LTE ou LTE Advanced.

9. Réseau de téléphonie mobile comprenant un ou plusieurs terminaux et au moins une unité centrale accessible par le biais du réseau de téléphonie mobile, destiné à exécuter le procédé selon l'une des revendications 1 à 8.

10. Module de données caractéristiques, en particulier carte SIM ou carte UICC, pour un terminal, destiné à l'exploitation dans un réseau de téléphonie mobile, dans lequel
le module de données caractéristiques comporte des moyens destinés à la synchronisation de données bidirectionnelle avec une unité centrale accessible par le biais du réseau de téléphonie mobile et est adapté pour exécuter le procédé selon l'une des revendications 1 à 8.

11. Application enregistrée sur un support de données, adaptée pour exécuter le procédé selon l'une des revendications 1 à 8, dans laquelle l'application peut être exécutée indirectement/directement sur un module de données caractéristiques selon la revendication 10.
